# FASCICULE DE BREVET EUROPEEN

(11) **EP 1 209 007 B1**
(45) Date de publication et mention de la délivrance du brevet: **02.02.2005**
(21) Numéro de dépôt: 01402974.8
(22) Date de dépôt: 21.11.2001
(51) Int. Cl.: B60B 35/04, B60B 35/00

(54) **Procédé de fabrication d'une fusée à plateau, et fusée à plateau susceptible d'être obtenue par mise en oeuvre de ce procédé**
Herstellungsverfahren für einen Achsschenkel mit Scheibe und so erhaltener Achsschenkel mit Scheibe
Method of manufacturing a stub axle with disk and stub axle and disk made in this way

(30) Priorité: 21.11.2000 FR 0015006
(43) Date de publication de la demande: 29.05.2002
(73) Titulaire: Valmex, 59690 Vieux Conde (FR)
(72) Inventeur: Schleiss, Jean-Pierre, 94100 Saint Maur (FR)
(74) Mandataire: Texier, Christian

(56) Documents cités:
- EP-A- 0 615 893
- FR-A- 2 755 195
- US-A- 3 801 124
- US-A- 4 080 003
- US-A- 4 828 328
- US-A- 5 226 691
- US-A- 5 868 409

## Description

La présente invention concerne un procédé de fabrication d'une fusée à plateau, destinée au montage d'une roue à la rotation autour d'un axe longitudinal déterminé par rapport à un support et présentant à cet effet :
- une partie formant un plateau transversal de montage sur le support, présentant un chant périphérique extérieur longitudinal, entourant ledit axe longitudinal,
- une partie formant une fusée longitudinale de montage tourillonnant de la roue, présentant une périphérie extérieure longitudinale, de révolution autour dudit axe longitudinal, et formant une saillie longitudinale d'un côté de la partie formant le plateau.

Dans l'état actuel de la technique, de telles fusées à plateau sont généralement réalisées en une seule pièce qui regroupe la partie formant plateau et la partie formant fusée et qui est obtenue par forgeage à chaud et usinage sur des centres d'usinage, avec l'inconvénient d'un coût opératoire important et d'investissements élevés. Un autre inconvénient de ce mode de fabrication réside dans le fait que les dimensions transversales de la partie formant plateau sont nécessairement limitées, ce qui limite l'usage des fusées à plateau ainsi obtenues aux faibles et moyennes motorisations ; en effet, plus la motorisation est puissante, plus on a besoin d'une surface transversale importante de la partie formant plateau, et plus la force nécessaire à sa réalisation par forgeage est importante.

On connaît également, par US-A-4 080 003, un procédé de réalisation d'une extrémité d'un essieu rigide par assemblage soudé respectif, à un tube matérialisant cet essieu rigide et présentant un axe longitudinal déterminé, de deux pièces dont l'une forme un plateau transversal et dont l'autre forme une fusée longitudinale qui prolonge coaxialement le tube au-delà du plateau. Par une zone longitudinalement extrême, la pièce formant la fusée traverse la pièce formant le plateau longitudinalement, de part en part, par un trou longitudinal défini par une périphérie intérieure de la pièce formant le plateau. Pour ménager sur chacune des pièces une zone d'appui à plat sur une face transversale, longitudinalement extrême, du tube en vue de permettre la soudure de chacune de ces pièces au tube, indépendamment l'une de l'autre, la zone extrême de la pièce formant la fusée et la périphérie intérieure de la pièce formant le plateau présentent des languettes respectives, qui alternent d'une pièce à l'autre.

Certes, la pièce formant le plateau et la pièce formant la fusée, dans le produit obtenu par mise en oeuvre de ce procédé connu, constituent ensemble une sorte de fusée à plateau, dans laquelle le plateau est toutefois dénué de toute fonction de montage de cette sorte de fusée à plateau sur un support, en l'espèce constitué par le tube.

Ce procédé connu ne peut cependant s'appliquer à la fabrication d'une fusée à plateau destinée à être montée sur un support, c'est-à-dire d'un produit possédant une cohérence propre, sans intervention du support à cet effet.

En effet, dans le cas du produit obtenu par ce procédé connu, il existe certes une liaison solidaire entre la pièce formant le plateau et la pièce formant la fusée, mais cette liaison solidaire résulte exclusivement de l'assemblage soudé de chacune de ces pièces, indépendamment l'une de l'autre, au tube faisant office de support, dont la présence est alors indispensable pour donner sa cohérence à l'ensemble, comparable à une fusée à plateau, formé par les deux pièces.

La résistance de la liaison mécanique entre la pièce formant la fusée et le support alors constitué par le tube, à l'encontre des efforts mécaniques usuellement transmis de la fusée au support, est assurée par l'assemblage soudé des languettes de cette pièce au tube et augmentée par emboîtement coaxial d'une couronne extrême de cette pièce dans le tube, mais la pièce formant le plateau ne joue aucun rôle à cet effet, contrairement au cas du plateau d'une fusée à plateau, lequel plateau a pour fonction essentielle d'assurer la transmission de ces efforts de la fusée au support.

En outre, la présence des languettes, indispensables à la soudure de chacune de ces deux pièces, indépendamment l'une de l'autre, au tube lorsque l'on met en oeuvre ce procédé connu implique une certaine complexité des formes respectives de la zone extrême de la pièce formant la fusée et de la périphérie intérieure de la pièce formant le plateau, et l'aménagement de ces languettes nécessite des outillages adaptés et/ou des opérations de fabrication adaptées, de façon défavorable en termes d'investissements et de coût opératoire.

Le but de la présente invention est de remédier à ces inconvénients et, à cet effet, la présente invention propose un procédé du type indiqué en préambule, ce procédé comportant, comme le procédé décrit dans US-A-4-080 003, la succession des étapes consistant à
a) fabriquer séparément :
   - d'une part un premier composant destiné à constituer la partie formant le plateau, sous une forme définie par deux faces planes, mutuellement parallèles et mutuellement raccordées par un chant périphérique extérieur destiné à constituer ledit chant périphérique extérieur et par un chant périphérique intérieur entourant un axe perpendiculaire auxdites faces et destiné à constituer ledit axe longitudinal,
   - d'autre part un deuxième composant destiné à constituer la partie formant la fusée, sous une forme présentant une symétrie générale de révolution autour d'un axe destiné à constituer ledit axe longitudinal et comportant une zone de montage tourillonnant de la roue, présentant une périphérie extérieure destinée à constituer ladite périphérie extérieure, et une zone de solidarisation avec le premier composant, présentant une périphérie extérieure complémentaire dudit chant périphérique intérieur,
b) emboîter coaxialement le deuxième composant, par sa zone de solidarisation, dans le premier composant, par son chant périphérique intérieur, dans une position relative déterminée dans laquelle la zone de montage tourillonnant forme une saillie axiale sur une première desdites faces planes,
c) solidariser mutuellement les premier et deuxième composants ainsi mutuellement emboîtés coaxialement dans ladite position relative déterminée,
ce procédé étant caractérisé en ce que, lors de l'étape a, on fabrique le premier composant de telle sorte que ledit chant intérieur présente une forme de révolution autour de l'axe correspondant, ladite forme étant une forme tronconique qui converge de la première desdites faces planes vers la deuxième desdites faces planes, au moins à son embouchure dans la première desdites faces planes, et le deuxième composant de telle sorte que la périphérie extérieure de sa zone de solidarisation avec le premier composant présente également une forme de révolution autour de l'axe correspondant, avec une conicité identique à celle du chant intérieur du premier composant.

Pour faciliter l'emboîtement coaxial du deuxième composant dans le premier composant lors de l'étape b, on fabrique le premier composant, lors de l'étape a, de telle sorte que ledit chant intérieur présente une forme tronconique qui converge de la première desdites faces planes vers la deuxième desdites faces planes, au moins à son embouchure dans la première desdites faces planes, étant entendu que le deuxième composant est fabriqué, lors de l'étape a, de sorte que sa zone de solidarisation avec le plateau présente une périphérie extérieure complémentaire dudit chant périphérique intérieur.

Cependant, pour affermir cet emboîtement coaxial mutuel des premier et deuxième composants, on fabrique de préférence le premier composant, lors de l'étape a, de telle sorte que ledit chant intérieur présente une forme cylindrique au moins à son embouchure dans la deuxième desdites faces planes, étant entendu que le deuxième composant est fabriqué lors de la même étape a de telle sorte que la zone de solidarisation avec le plateau présente une périphérie extérieure complémentaire dudit chant périphérique intérieur, auquel cas le chant périphérique intérieur du premier composant et la zone de solidarisation du deuxième composant avec ce premier composant présentent deux zones mutuellement adjacentes longitudinalement, à raison d'une zone cylindrique adjacente à la deuxième desdites faces planes du premier composant et d'une zone tronconique qui est adjacente à la première de ces faces planes et s'évase vers celle-ci en ce qui concerne le chant périphérique intérieur du premier composant.

Chacun des premier et deuxième composants présente une forme beaucoup plus simple que la fusée à plateau qu'ils constituent après solidarisation mutuelle, ce qui permet de fabriquer chacun d'entre eux, lors de l'étape a, par un procédé respectif, adapté au mieux à sa conformation et permettant d'accéder ainsi à un coût opératoire plus réduit et à des investissements beaucoup plus faibles. Ainsi, selon un mode de mise en oeuvre préféré de l'étape a du procédé selon l'invention, on fabrique le premier composant par découpage d'une plaque, sans qu'il soit nécessaire de lui appliquer ensuite des opérations complémentaires d'usinage, et l'on fabrique le deuxième composant par un procédé choisi dans un groupe comportant le décolletage ou le forgeage, notamment à froid, suivi d'usinage, ce qui correspond de façon générale à des conditions optimales lorsqu'il s'agit de fabriquer respectivement un composant plat et un composant présentant au moins pour l'essentiel une forme de révolution.

En outre, il devient possible de donner au premier composant toute dimension voulue, notamment transversalement, en relation avec toute motorisation voulue, sans limite quant à cette motorisation.

Ces avantages sont particulièrement sensibles lorsque, de façon connue en elle-même, la fusée à plateau doit comporter une portée coaxiale de montage d'une bride de montage d'un carter de cylindres de frein à disque, à la transition entre la partie formant fusée et la partie formant plateau.

En effet, on peut avantageusement prévoir, dans ce cas, de fabriquer le deuxième composant, lors de l'étape a, de telle sorte qu'il présente cette portée coaxiale entre lesdites zones de montage tourillonnant et de solidarisation, ladite portée formant une saillie radiale au moins par rapport à la zone de montage tourillonnant.

L'aménagement de cette portée ne complique pratiquement pas la fabrication du deuxième composant, c'est-à-dire n'affecte pratiquement pas le prix de revient de celui-ci, alors que son aménagement par forgeage à chaud et usinage lorsqu'on fabrique une fusée à plateau en une seule pièce, conformément à l'art antérieur, complique considérablement la fabrication et en affecte gravement le coût.

On pourra observer que, lorsqu'une telle portée doit être prévue, on a déjà proposé, dans l'art antérieur, de monter une fusée dite "fusée clou", comportant une tête, une zone destinée à recevoir un roulement de roue, une partie moletée à la transition entre cette zone et la tête et une extrémité libre filetée destinée à recevoir un écrou de roue, par emmanchement à force dans une pièce forgée et usinée, ou encore moulée et usinée de façon à former à la fois un plateau de montage sur le support de roue et ladite portée; la partie moletée de la fusée clou assure provisoirement une solidarisation de celle-ci avec la pièce forgée ou moulée puis usinée jusqu'à ce qu'elles soient fixées l'une par rapport à l'autre par serrage de cette pièce entre la tête et l'écrou de roue, qui prend appui sur ladite pièce à l'opposé de la tête par l'intermédiaire du roulement de roue, monté sur la zone prévue à cet effet. Lorsqu'on le compare à ce procédé connu, le procédé selon l'invention conserve l'avantage d'une grande simplicité et d'une grande économie de réalisation du premier composant, formant le plateau, puisque la portée précitée n'est pas réalisée sur celui-ci, qui conserve ainsi sa forme plate propice à une fabrication dans des conditions particulièrement économiques, par exemple par découpage d'une plaque, mais est réalisée sur le deuxième composant, dont le procédé de fabrication, optimal pour la réalisation de la zone de montage tourillonnant de la roue et de la zone de solidarisation avec le premier composant, est également optimal pour la réalisation de cette portée.

Afin, à la fois, de faire en sorte que l'emboîtement coaxial du deuxième composant, par sa zone de solidarisation, dans le premier composant, par son chant périphérique intérieur, s'effectue sur une dimension longitudinale aussi grande que possible et d'éviter que le deuxième composant forme une saillie par rapport au premier composant longitudinalement à l'opposé de la portée de montage tourillonnant de la roue, ce qui compliquerait le montage ultérieur de la fusée à plateau, par sa partie formant plateau, sur le support et nécessiterait une modification de celui-ci en comparaison avec les supports connus, on prévoit de fabriquer le deuxième composant, selon un mode de mise en oeuvre préféré de l'étape a, de telle sorte qu'il présente une face extrême plane, délimitant axialement la zone de solidarisation à l'opposé de la zone de montage tourillonnant, et, lors de l'étape b, on fait coïncider coplanairement ladite face extrême avec la deuxième desdites faces planes du premier composant, dans ladite position relative déterminée.

Divers modes de solidarisation mutuelle des premier et deuxième composants occupant ladite position relative déterminée, lors de l'étape c, peuvent être choisis mais on met de préférence en oeuvre cette étape c par soudage mutuel des premier et deuxième composants, autour de ladite zone de solidarisation et dudit chant périphérique intérieur.

De façon particulièrement préférée, on pratique ledit soudage mutuel par chacune des première et deuxième dites faces planes, dans une zone annulaire respective située entre ladite zone de solidarisation et ledit chant périphérique intérieur et localisée à proximité de la face plane respective.

A cet égard, on utilise avantageusement une soudure par laser et on observe que le choix d'une conformation du chant périphérique intérieur du premier composant, telle que celui-ci présente une forme tronconique qui converge vers la première des faces planes du premier composant au moins à l'embouchure de ce chant périphérique intérieur dans cette première face plane, et de conformer complémentairement la zone de solidarisation du deuxième composant avec le premier composant, facilite l'accès des moyens de soudure par ladite première face.

On obtient ainsi une solidarisation mutuelle des premier et deuxième composants, permettant de communiquer à la fusée à plateau ainsi obtenue, à la transition entre la partie formant fusée et la partie formant plateau, une résistance mécanique au moins aussi bonne que celle qui est obtenue par des procédés antérieurs de fabrication d'une fusée à plateau et que celle que l'on obtient avec la technique traditionnelle de montage des "fusées clous".

Dans la mesure où la fusée à plateau obtenue par mise en oeuvre du procédé selon l'invention présente une structure en elle-même originale, la présente invention s'étend à une telle fusée à plateau, indépendamment du procédé par lequel elle est obtenue.

Cette fusée à plateau selon l'invention, destinée au montage d'une roue à la rotation autour d'un axe longitudinal déterminé par rapport à un support et présentant à cet effet :
- une partie formant un plateau transversal de montage sur le support, présentant un chant périphérique extérieur longitudinal entourant ledit axe longitudinal,
- une partie formant une fusée longitudinale de montage tourillonnant de la roue, présentant une périphérie extérieure longitudinale, de révolution autour dudit axe longitudinal, et formant une saillie longitudinale d'un côté de la partie formant le plateau,
   cette fusée comportant, comme la fusée décrite dans US-A-4-080 003:
   - un premier composant constituant la partie formant le plateau, sous une forme définie par deux faces planes, perpendiculaires audit axe longitudinal et mutuellement raccordées par ledit chant périphérique extérieur et par un chant périphérique intérieur entourant ledit axe longitudinal,
   - un deuxième composant constituant la partie formant la fusée, sous une forme présentant une symétrie générale de révolution autour dudit axe longitudinal et comportant une zone de montage tourillonnant de la roue, présentant ladite périphérie extérieure, et une zone de solidarisation avec le premier composant, présentant une périphérie extérieure complémentaire dudit chant périphérique intérieur,
le deuxième composant, par sa zone de solidarisation, étant emboîté coaxialement dans le premier composant, par son chant périphérique intérieur, dans une position relative déterminée dans laquelle la zone de montage tourillonnant forme ladite saillie longitudinale sur une première desdites faces planes,
et les premier et deuxième composants ainsi mutuellement emboîtés coaxialement étant solidarisés mutuellement dans ladite position relative déterminées,
cette fusée étant caractérisée en ce que ledit chant intérieur du premier composant présente une forme de révolution autour dudit axe longitudinal, ladite forme étant une forme tronconique qui converge de la première desdites faces planes vers la deuxième desdites faces planes au moins à son embouchure dans la première desdites faces planes, et en ce que ladite périphérie extérieure de la zone de solidarisation du deuxième composant avec le premier composant présente également une forme de révolution autour dudit axe longitudinal, avec une conicité identique à celle du chant intérieur du premier composant.

Les premier et deuxième composants présentent de préférence les conformations préférées précédemment décrites, obtenues suivant les modes de mise en oeuvre préférés de l'étape a du procédé selon l'invention lorsque la fusée à plateau est obtenue par ce procédé, et ces deux composants sont de préférence solidarisés mutuellement par soudure, la soudure étant localisée de préférence comme on l'a décrit en tant que conséquence du procédé selon l'invention.

D'autres caractéristiques et avantages du procédé de fabrication et de la fusée à plateau selon l'invention ressortiront de la suite de la description, ainsi que des dessins annexés, qui font partie intégrante de cette description.
La figure 1 montre une vue éclatée d'une fusée à plateau selon l'invention, correspondant par exemple au début de la mise en oeuvre de l'étape b, alors que les premier et deuxième composants sont disposés coaxialement mais ne sont pas encore emboîtés mutuellement.
La figure 2 montre une vue de cette fusée en coupe par un plan incluant l'axe commun des premier et deuxième composants, et illustre schématiquement la coopération de la fusée selon l'invention avec d'autres composants d'un véhicule automobile.

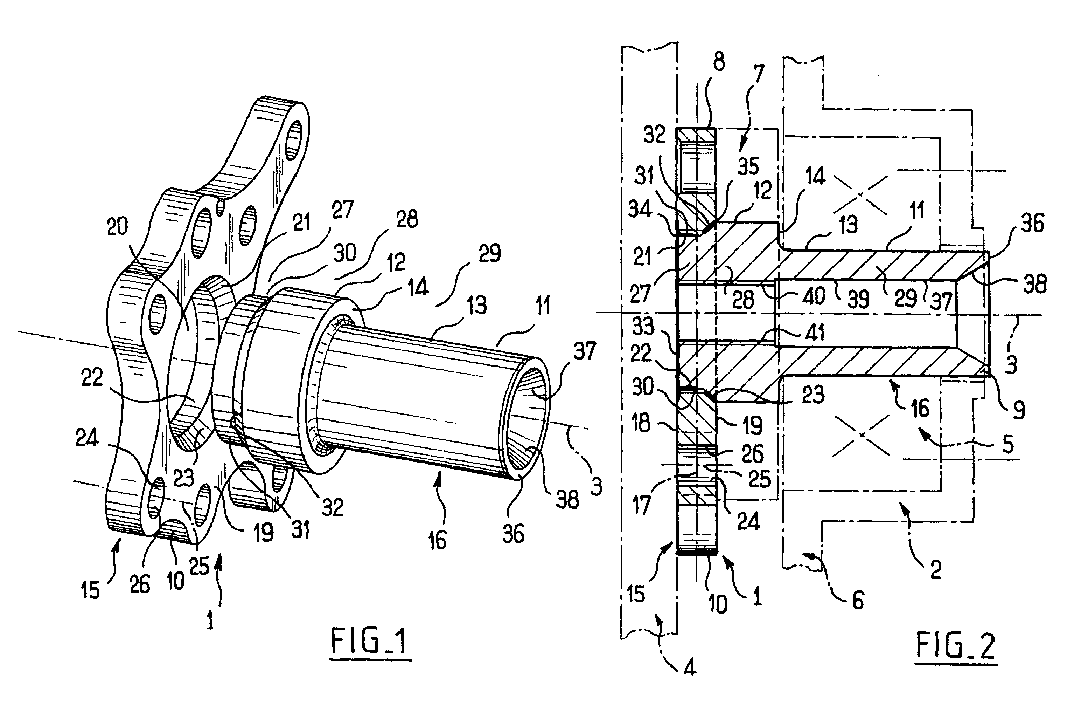

Comme les fusées à plateau de l'art antérieur, la fusée à plateau 1 selon l'invention est destinée à assurer le montage d'une roue, schématisée à la figure 2 par son moyeu 2, à la rotation autour d'un axe longitudinal déterminé 3 par rapport à un support 4 lié à la carrosserie non représentée du véhicule par un ensemble de suspension et, le cas échéant, un ensemble de direction, d'une façon bien connue d'un homme du métier et non représentée. De façon également connue et non représentée, le moyeu 2 porte de façon solidaire mais amovible un flasque non représenté de la roue, et il est monté à la rotation autour de l'axe 3, sur la fusée à plateau 1, sans autre possibilité de déplacement relatif, par l'intermédiaire d'un roulement 5. Dans l'exemple illustré, ce moyeu 2 forme ou porte solidairement un disque de freinage 6 qui, comme l'ensemble du moyeu 2, présente une forme générale de révolution autour de l'axe 3 et qui est destiné à coopérer avec des mâchoires de freinage non représentées, portées par des cylindres de frein également non représentés et eux-mêmes portés par une bride transversale 7 rapportée de façon solidaire mais généralement amovible, sur le support 4, par l'intermédiaire de la fusée à plateau 1 et longitudinalement interposée entre le support 4 et un ensemble formé par le moyeu 2, le roulement 5 et le disque 6.

Pour la suite de la description, l'axe 3 sera considéré comme une référence de longitudinalité et de transversalité, ainsi que de symétrie de révolution, lorsque l'on décrira la fusée à plateau 1 selon l'invention, ainsi que les différentes parties de ses différents composants, même considérés individuellement.

De façon également connue en elle-même, la fusée selon l'invention 1, lorsqu'elle est considérée dans sa généralité, comporte deux parties 8, 9 qui présentent des orientations générales différentes, en relation avec l'axe 3, et assurent des fonctions respectives.

La partie 8 forme un plateau transversal qui sert au montage solidaire mais amovible, par exemple vissé, de la fusée à plateau 1 sur le support 4 ainsi qu'au montage solidaire mais amovible, par exemple vissé, de la bride 7 sur la fusée à plateau 1. De forme générale longitudinalement aplatie, cette partie 8 est délimitée, dans le sens d'un éloignement par rapport à l'axe 3, par un chant périphérique extérieur 10 longitudinal qui entoure l'axe 3.

La partie 9 présente une orientation longitudinale et elle est placée en porte-à-faux longitudinal par rapport à la partie 8, d'un côté de celle-ci. Elle forme une fusée longitudinale de montage tourillonnant de la roue, c'est-à-dire du moyeu 2 par l'intermédiaire du roulement 5, autour de l'axe 3, par rapport à la fusée à plateau 1, sans autre possibilité de déplacement relatif. A cet effet, cette partie 9 est délimitée, dans le sens d'un éloignement par rapport à l'axe 3, par une périphérie extérieure longitudinale 11 de révolution autour de cet axe et ainsi placée en saillie longitudinale d'un côté de la partie 8. Plus précisément, dans l'exemple illustré dans lequel la partie 9 formant fusée sert également au centrage de la bride 7, cette périphérie extérieure 11 présente une première zone 12 longitudinalement adjacente à la partie formant plateau 8 et cylindrique de révolution autour de l'axe 3 avec un diamètre déterminé, non référencé, pour constituer une portée coaxiale de montage de la bride 7, et une deuxième zone 13 située longitudinalement à l'opposé de la partie formant plateau 8 par rapport à la première zone 12 et présentant une forme cylindrique de révolution autour de l'axe 3 avec un diamètre déterminé, non référencé, inférieur à celui de la première zone 12 pour servir au montage tourillonnant du moyeu 2 par l'intermédiaire du roulement 5. La portée 12 de montage de la bride 7 forme ainsi une saillie radiale par rapport à la zone 13 de montage tourillonnant, à laquelle elle est raccordée par un épaulement plan 14, annulaire de révolution autour de l'axe 3 auquel cet épaulement 14 est perpendiculaire et servant d'appui au roulement 5 dans le sens longitudinal d'un rapprochement par rapport au support 4 et à la partie 8.

Conformément à la présente invention, la fusée 1 selon l'invention est constituée par emboîtement coaxial et solidarisation mutuelle de deux composants 15, 16 initialement fabriqués séparément, dont le premier constitue la partie 8 formant le plateau alors que le deuxième constitue la partie 9 formant la fusée.

Le composant 15 est plat, présente un plan moyen de symétrie 17 perpendiculaire à l'axe 3, et il est délimité, dans les deux sens de cet axe 3, par deux faces planes 18, 19, mutuellement parallèles, mutuellement symétriques par rapport au plan 17 et mutuellement raccordées, dans le sens d'un éloignement par rapport à l'axe 3, par un chant constituant le chant périphérique extérieur 10.

Suivant l'axe 3, le composant 15 est percé de part en part d'un trou 20 délimité, dans le sens d'un éloignement par rapport à l'axe 3, par un chant périphérique intérieur 21 du composant 15. Les faces 18 et 19 de celui-ci se raccordent à ce chant périphérique intérieur 21 dans le sens d'un rapprochement vis-à-vis de l'axe 3.

Conformément à un mode de mise en oeuvre préféré de la présente invention, le chant périphérique intérieur 21 présente deux zones 22, 23 qui sont mutuellement adjacentes longitudinalement et définissent l'embouchure du trou 20 ou du chant périphérique intérieur 21 respectivement dans la face 18 et dans la face 19.

Dans sa zone 22, le chant périphérique intérieur 21 est cylindrique de révolution autour de l'axe 3 avec un diamètre intermédiaire entre les diamètres respectifs des zones 12 et 13 de la périphérie extérieure 11 de la partie 9 de la fusée à plateau 1. Dans l'exemple illustré, cette zone cylindrique 22 du chant périphérique intérieur 21 s'étend à partir de la face 18 sur une dimension de l'ordre des deux tiers aux trois quarts de la dimension longitudinale ou épaisseur du composant 15 entre ses faces 18 et 19. Dans la zone 23, dont la dimension longitudinale correspond à la partie restante de l'épaisseur du composant 15 entre ses faces 18 et 19, le chant 21 est tronconique de révolution autour de l'axe 3 et s'évase dans un sens longitudinal allant de la face 18 vers la face 19, d'un diamètre minimal qui correspond à celui de la zone 22 à un diamètre maximal qui correspond à celui de la zone 12 de la périphérie extérieure 11 de la partie 9. Le chant 21 présente ce diamètre maximal à son raccordement avec la face 19.

De façon répartie entre le chant périphérique intérieur 21 et le chant périphérique extérieur 10, le composant 15 est en outre percé longitudinalement, de part en part, d'un certain nombre de trous 24, par exemple délimités par une face périphérique intérieure respective 26 cylindrique de révolution autour d'un axe respectif 25 parallèle à l'axe 3. Ces trous 24 sont positionnés et dimensionnés au choix d'un homme du métier, pour recevoir coaxialement des boulons, non illustrés, dont les uns assurent la fixation de la fusée à plateau 1, par sa partie 8, sur le support 4 et dont les autres servent à la fixation, sur la partie 8, de la bride 7 de montage des cylindres du frein à disque; certains de ces trous 24 peuvent également servir au montage solidaire mais amovible d'autres composants, tels qu'un carter de protection du disque 6, d'une façon connue en elle-même d'un homme du métier et par conséquent non détaillée.

Le composant 15 ainsi constitué peut être avantageusement obtenu par découpage fin d'une plaque métallique, par exemple à la presse, au laser ou au jet d'eau ; les faces 18 et 19 sont alors directement constituées par des faces de cette plaque, alors que le chant périphérique extérieur 10 peut résulter directement du découpage, sans reprise ultérieure d'usinage. Il peut en être de même du chant périphérique intérieur 21 et des faces périphériques intérieures 26 qui, selon la technique de découpage utilisée et la précision que l'on désire leur donner, peuvent cependant faire ensuite l'objet d'une opération d'usinage.

Le composant 16 est quant à lui réalisé sous une forme présentant une symétrie générale de révolution autour de l'axe 3. Plus précisément, dans l'exemple non limitatif illustré, il présente une forme tubulaire de révolution autour de cet axe 3.

De façon répartie le long de cet axe 3, le composant 16 comporte trois zones 27, 28, 29 mutuellement adjacentes longitudinalement, la zone 28 étant intercalée longitudinalement entre les zones 27 et 29.

La zone 27 constitue une zone de solidarisation du composant 16 avec le composant 15 et, à cet effet, le composant 16 est délimité dans le sens d'un éloignement par rapport à l'axe 3, dans cette zone 27, par une périphérie extérieure 30 annulaire de révolution autour de l'axe 3 et présentant une forme complémentaire de celle du chant périphérique intérieur 21 du composant 15. En d'autres termes, la périphérie extérieure 30 comporte deux zones mutuellement adjacentes longitudinalement, à savoir une zone 31 cylindrique de révolution autour de l'axe 3 avec un diamètre identique à celui de la zone 22 du chant 21 et une dimension longitudinale identique à celle de cette zone 22, et une zone 32 complémentaire de la zone 23, c'est-à-dire s'évasant progressivement, à partir de la zone 31, avec une conicité identique à celle de la zone 23 et une dimension longitudinale identique à celle de cette zone 23.

Longitudinalement à l'opposé de son raccordement avec la zone 32, la zone 31 de la périphérie extérieure 30 se raccorde à une face extrême plane 33, transversale, qui délimite axialement la zone 27, longitudinalement à l'opposé des zones 28 et 29. Dans l'exemple illustré, dans lequel le composant 16 présente une forme tubulaire, la face extrême 33 est annulaire de révolution autour de l'axe 3, auquel elle est perpendiculaire, mais, dans un mode de réalisation non représenté selon lequel le composant 16 serait plein, cette face présenterait la forme d'un disque, comme le comprendra aisément un homme du métier.

Compte tenu de cette conformation de la zone 27, le composant 16 s'emboîte précisément, coaxialement, par cette zone 27, dans le trou 20 du composant 15, par la face 19 de celui-ci, jusqu'à occuper par rapport au composant 15 une position déterminée, illustrée à la figure 2, dans laquelle les zones 31 et 32 de la périphérie extérieure 30 de la zone 27 épousent les zones 22 et 23 du chant périphérique intérieur 21 du composant 15, et dans laquelle la face extrême 33 coïncide coplanairement avec la face 18 du composant 15.

La zone 27 du composant 16 sert non seulement à assurer cet emboîtement coaxial précis en position relative déterminée, mais également à autoriser une solidarisation mutuelle des deux composants 15, 16 dans cette position relative déterminée, de préférence par soudage mutuel, notamment au laser, de préférence à partir de chacune des faces 18 et 19, dans une zone annulaire respective 34, 35, avantageusement continue en direction circonférentielle de façon à empêcher toute pénétration d'humidité ou autre milieu oxydant entre la périphérie extérieure 30 de la zone 27 et le chant périphérique intérieur 21 du composant 15. Plus précisément, la zone annulaire 34 de soudure est localisée entre la zone 22 du chant périphérique intérieur 34 du composant 15 et la zone 31 de la périphérie extérieure 30 de la zone 27 du composant 16, dans une position adjacente aux faces 18 et 33, mutuellement coplanaires, et la zone annulaire 35 est localisée entre la zone 23 du chant périphérique intérieur 21 et la zone 35 de la périphérie extérieure 30, dans une position adjacente à la face 19. L'angle, non référencé, que les zones 23 et 32 forment par rapport à l'axe 3 est choisi de façon à faciliter la soudure dans la zone 35, notamment au laser ; dans l'exemple illustré, il est de 45° mais on pourrait choisir une valeur différente sans sortir pour autant du cadre de la présente invention ; de même, on pourrait choisir différemment les conformations respectives, cependant mutuellement complémentaires, du chant périphérique intérieur 21 et de la périphérie extérieure 30 sans sortir pour autant du cadre de la présente invention, bien que la conformation décrite et représentée soit actuellement une conformation préférée.

Dans les zones 28 et 29, qui se succèdent longitudinalement, dans cet ordre, à partir de la zone 27, le composant 16 est délimité, dans le sens d'un éloignement par rapport à l'axe 3, par une périphérie extérieure qui constitue la périphérie extérieure 11 de la partie 9. Plus précisément, dans sa zone 28, le composant 16 est délimité par la première zone 12 de cette périphérie extérieure 11 dans le sens d'un éloignement par rapport à l'axe 3 pour définir la portée coaxiale de montage de la bride 7 alors que, dans la zone 29 qui est située longitudinalement à l'opposé de la zone 27 par rapport à la zone 28, le composant 16 est délimité par la zone 13 de la périphérie extérieure 11 dans le sens d'un éloignement par rapport à l'axe 3, si bien que la zone 29 constitue une zone de montage tourillonnant du moyeu de roue 2 ; l'épaulement 14, entre les zones 11 et 12 de la périphérie extérieure 11, définit la transition entre les zones 28 et 29 du composant 16. Par contre, la transition entre la périphérie extérieure 30 de la zone 27 et la zone 12 de la périphérie extérieure 11, à la transition entre les zones 27 et 28, s'effectue directement par la zone 32 de la périphérie extérieure 30, dont le plus grand diamètre coïncide avec le diamètre de la zone 12.

Ainsi, lorsque le composant 16 occupe par rapport au composant 15 la position déterminée précitée d'emboîtement précis et de solidarisation de la zone 27 à l'intérieur du trou 20 du composant 15, les zones 28 et 29, et avec elles les zones 12 et 13 de la périphérie extérieure 11, sont placées en porte-à-faux par rapport à la face 19 du composant 15, et en saillie suivant l'axe 3 par rapport à cette face 19.

Longitudinalement à l'opposé de son raccordement avec la zone 28, la zone 29 du composant 16 est délimitée par une face extrême plane 36 tournée longitudinalement à l'opposé de la face extrême 33. Dans l'exemple illustré, dans lequel le composant 16 présente une forme tubulaire, cette face 36 présente une forme annulaire de révolution autour de l'axe 3, auquel elle est perpendiculaire, mais cette face 36 pourrait également présenter la forme d'un disque plan, perpendiculaire à l'axe 3, dans un mode de réalisation non représenté dans lequel le composant 16 serait plein. Cette face 36 assure le raccordement de la zone 13 de la périphérie extérieure 11, dans le sens d'un rapprochement vis-à-vis de l'axe 3, avec une périphérie intérieure 37 du composant 16, laquelle périphérie intérieure 37 présente une forme de révolution autour de l'axe 3 comme l'ensemble du composant 16.

A son raccordement avec la face extrême 36, la périphérie intérieure 37 présente une zone 38 tronconique de révolution autour de l'axe 3 et se rétrécissant dans un sens longitudinal allant de la face 36 vers la face 33, jusqu'à se raccorder à une zone 39 de la périphérie intérieure 37, laquelle zone 39 est cylindrique de révolution autour de l'axe 3 avec un diamètre inférieur à celui de la zone 13 de la périphérie extérieure 11, ainsi qu'à celui de la zone 31 de la périphérie extérieure 30, lequel est intermédiaire entre les diamètres respectifs des zones 12 et 13 de la périphérie extérieure 11. Dans un sens longitudinal allant de la face 36 vers la face 33, la zone 39 s'étend approximativement sur la totalité de la dimension longitudinale de la zone 29 du composant 16, c'est-à-dire approximativement jusqu'à la transition entre les zones 28 et 29, au niveau de laquelle elle se raccorde à une zone 40 également cylindrique de révolution autour de l'axe 3 mais avec un diamètre légèrement inférieur à celui de la zone 39. Cette zone 40, qui se raccorde à la face extrême 33 dans un sens longitudinal allant de la face extrême 36 vers cette face 33, est munie d'un taraudage 41 susceptible de recevoir, de façon non représentée, une vis de retenue du roulement 5 et du moyeu 2 dans le sens longitudinal d'un éloignement par rapport au support 4 et à la partie 8; on observera que cette vis ne joue aucun rôle dans l'assemblage mutuel des composants 15 et 16, qui se comportent comme un tout solidaire, présentant l'intégralité de sa résistance mécanique, notamment à l'encontre d'une dissociation de ses composants 14 et 15, même en l'absence de cette vis et du roulement 5.

Au cours d'une étape initiale de fabrication de la fusée à plateau 1 selon l'invention, au cours de laquelle on fabrique également le composant 15, par un procédé propre, autorisé par la conformation choisie selon l'invention pour ce composant 15, on fabrique le composant 16 par un procédé spécifiquement adapté à la conformation choisie pour ce dernier conformément à la présente invention. Le composant 16 peut ainsi être fabriqué, par exemple, par décolletage, ou encore par forgeage à froid et usinage, sous la forme qui vient d'être décrite.

Au cours d'une étape suivante du procédé, on emboîte mutuellement, coaxialement, les deux composants 15 et 16 de la façon précédemment décrite, pour les amener dans la position relative déterminée également précédemment décrite, puis on les solidarise mutuellement, dans cette position relative déterminée, par soudure notamment au laser sur les zones annulaires 34 et 35, c'est-à-dire par l'une et l'autre des faces 18 et 19 du composant 15.

On obtient ainsi une fusée à plateau 1 apte à remplir toutes les fonctions des fusées à plateau de l'art antérieur, mais sans être limité quant à la conformation que l'on donne à cette fusée, notamment à sa partie 8 formant plateau, par des impératifs de fabrication ; en particulier, il est possible de donner à cette partie 8 formant plateau des dimensions transversales, c'est-à-dire des dimensions de ses faces 18 et 19, et une conformation transversale, c'est-à-dire une conformation de son chant 10 par exemple suivant le plan moyen 17, choisies de façon à autoriser l'utilisation d'une fusée selon l'invention 1 en association avec tout type de motorisation, même puissante, sans être limité en cela par des impératifs de fabrication de la fusée à plateau.

## Revendications

1. Procédé de fabrication d'une fusée à plateau (1), destinée au montage d'une roue (moyeu 2) à la rotation autour d'un axe longitudinal déterminé (3) par rapport à un support (4) et présentant à cet effet :
- une partie (8) formant un plateau transversal de montage sur le support (4), présentant un chant périphérique extérieur (10) longitudinal, entourant ledit axe longitudinal (3),
- une partie (9) formant une fusée longitudinale de montage tourillonnant de la roue (moyeu 2), présentant une périphérie extérieure (11) longitudinale, de révolution autour dudit axe longitudinal (3), et formant une saillie longitudinale d'un côté de la partie (8) formant le plateau,
ce procédé comportant la succession des étapes consistant à :
a) fabriquer séparément :
- d'une part un premier composant (15) destiné à constituer la partie (8) formant le plateau, sous une forme définie par deux faces planes (18,19), mutuellement parallèles et mutuellement raccordées par un chant périphérique extérieur (10) destiné à constituer ledit chant périphérique extérieur (10) et par un chant périphérique intérieur (21) entourant un axe (3) perpendiculaire aux dites faces (18,19) et destiné à constituer ledit axe longitudinal (3),
- d'autre part un deuxième composant (16) destiné à constituer la partie (9) formant la fusée, sous une forme présentant une symétrie générale de révolution autour d'un axe (3) destiné à constituer ledit axe longitudinal (3) et comportant une zone (29) de montage tourillonnant de la roue (moyeu 2), présentant une périphérie extérieure (11) destinée à constituer ladite périphérie extérieure (11), et une zone (27) de solidarisation avec le premier composant (15), présentant une périphérie extérieure (30) complémentaire dudit chant périphérique intérieur (21),
b) emboîter coaxialement le deuxième composant (16), par sa zone de solidarisation (27), dans le premier composant (15), par son chant périphérique intérieur (21), dans une position relative déterminée dans laquelle la zone de montage tourillonnant (29) forme une saillie axiale sur une première (19) desdites faces planes (18,19),
c) solidariser mutuellement les premier et deuxième composants (15,16) ainsi mutuellement emboîtés coaxialement dans ladite position relative déterminée.
ce procédé étant **caractérisé en ce que**, lors de l'étape a, on fabrique le premier composant (15) de telle sorte que ledit chant intérieur (21) présente une forme de révolution autour de l'axe (3) correspondant, ladite forme étant une forme tronconique qui converge de la première (19) desdites faces planes (18,19) vers la deuxième (19) desdites faces planes (18,19), au moins à son embouchure dans la première (19) desdites faces planes (18,19), et le deuxième composant (16) de telle sorte que la périphérie extérieure (30) de sa zone (17) de solidarisation avec le premier composant (15) présente également une forme de révolution autour de l'axe (3) correspondant, avec une conicité identique à celle du chant intérieur (21) du premier composant (15).

2. Procédé selon la revendication 1, **caractérisé en ce que** l'on fabrique le premier composant (15) par découpage d'une plaque lors de l'étape a.

3. Procédé selon l'une quelconque des revendications 1 et 2, **caractérisé en ce que** l'on fabrique le deuxième composant (16) par un procédé choisi dans un groupe comportant le décolletage ou le forgeage suivi d'usinage lors de l'étape a.

4. Procédé selon l'une quelconque des revendications 1 à 3, **caractérisé en ce que** l'on fabrique le deuxième composant (16) de telle sorte qu'il présente une portée coaxiale (28) de montage ultérieur d'une bride (7) de montage d'un carter de cylindres de frein à disque, entre lesdites zones de montage tourillonnant et de solidarisation (27,29), ladite portée (28) formant une saillie radiale au moins par rapport à la zone de montage tourillonnant (29).

5. Procédé selon l'une quelconque des revendications 1 à 4, **caractérisé en ce que** l'on fabrique le deuxième composant (16) de telle sorte qu'il présente une face extrême (33) plane, délimitant axialement la zone de solidarisation (27) à l'opposé de la zone de montage tourillonnant (29), lors de l'étape a, et **en ce que** l'on fait coïncider coplanairement ladite face extrême (33) avec la deuxième (18) desdites faces planes (18,19) lors de l'étape b, dans ladite position relative déterminée.

6. Procédé selon l'une quelconque des revendications 1 à 5, **caractérisé en ce que** l'on fabrique le premier composant (16) de telle sorte que ledit chant intérieur (21) présente une forme cylindrique au moins à son embouchure dans la deuxième (18) desdites faces planes (18,19) lors de l'étape a.

7. Procédé selon l'une quelconque des revendications 1 à 6, **caractérisé en ce que** l'on met en oeuvre l'étape c par soudage mutuel des premier et deuxième composants (15,16), autour de ladite zone de solidarisation (27) et dudit chant périphérique intérieur (21).

8. Procédé selon la revendication 7, **caractérisé en ce que** l'on pratique ledit soudage mutuel par chacune des première (19) et deuxième desdites faces planes (18,19), dans une zone annulaire respective (34,35) située entre ladite zone de solidarisation (27) et ledit chant périphérique intérieur (21) et localisée à proximité de la face plane (18,19) respective.

9. Fusée à plateau, destinée au montage d'une roue (moyeu 2) à la rotation autour d'un axe longitudinal déterminé (3) par rapport à un support (4) et présentant à cet effet :
- une partie (8) formant un plateau transversal de montage sur le support (4), présentant un chant périphérique extérieur (10) longitudinal, entourant ledit axe longitudinal (3),
- une partie (9) formant une fusée longitudinale de montage tourillonnant de la roue (moyeu 2), présentant une périphérie extérieure (11) longitudinale, de révolution autour dudit axe longitudinal (3), et formant une saillie longitudinale d'un côté de impartie (8) formant le plateau,
cette fusée comportant :
- un premier composant (15) constituant la partie (8) formant le plateau, sous une forme définie par deux faces planes (18,19), perpendiculaires audit axe longitudinal (3) et mutuellement raccordées par ledit chant périphérique extérieur (10) et par un chant périphérique intérieur (21) entourant ledit axe longitudinal (3),
- un deuxième composant (16) constituant la partie (9) formant la fusée, sous une forme présentant une symétrie générale de révolution autour dudit axe longitudinal (3) et comportant une zone (29) de montage tourillonnant de la roue (moyeu 2), présentant ladite périphérie extérieure (11), et une zone (27) de solidarisation avec le premier composant (15), présentant une périphérie extérieure (30) complémentaire dudit chant périphérique intérieur (21),
le deuxième composant (16), par sa zone de solidarisation (27), étant emboîté coaxialement dans le premier composant (15), par son chant périphérique intérieur (21), dans une position relative déterminée dans laquelle la zone de montage tourillonnant (29) forme ladite saillie longitudinale sur une première (19) desdites faces planes (18,19),
et les premier et deuxième composants (15,16) ainsi mutuellement emboîtés coaxialement étant solidarisés mutuellement dans ladite position relative déterminée,
**caractérisée en ce que** ledit chant intérieur (21) du premier composant (15) présente une forme de révolution autour dudit axe longitudinal (3), ladite forme étant une forme tronconique qui converge de la première (19) desdites faces (18,19) planes vers la deuxième (18) desdites faces planes (18,19) au moins à son embouchure dans la première (19) desdites faces planes (18,19), et **en ce que** ladite périphérie extérieure (30) de la zone (27) de solidarisation du deuxième composant (16) avec le premier composant (15) présente également une forme de révolution autour dudit axe longitudinal (3), avec une conicité identique à celle du chant intérieur (21) du premier composant (15).

10. Fusée a plateau selon la revendication 9, **caractérisée en ce que** le deuxième composant (16) présente une portée coaxiale (28) de montage d'une bride (7) de montage d'un carter de cylindres de frein à disque, entre lesdites zones de montage tourillonnant et de solidarisation (27,29), ladite portée (28) formant une saillie radiale au moins par rapport à la zone de montage tourillonnant (29).

11. Fusée à plateau selon l'une quelconque des revendications 9 et 10, **caractérisée en ce que** le deuxième composant (16) présente une face extrême (33) plane, délimitant axialement la zone de solidarisation (27) à l'opposé de la zone de montage tourillonnant (29) et coïncidant coplanairement avec la deuxième (18) desdites faces planes (18,19) dans ladite position relative déterminée.

12. Fusée à plateau selon l'une quelconque des revendications 9 à 11, **caractérisée en ce que** ledit chant intérieur (21) du premier composant (15) présente une forme cylindrique au moins à son embouchure dans la deuxième (18) desdites faces planes (18,19).

13. Fusée à plateau selon l'une quelconque des revendications 9 à 12, **caractérisée en ce que** les premier et deuxième composants (15,16) sont solidarisés mutuellement par soudure autour de ladite zone de solidarisation (27) et dudit chant périphérique intérieur (21).

14. Fusée à plateau selon la revendication 13, **caractérisée en ce que** ladite soudure est localisée à proximité de chacune des première (19) et deuxième (18) desdites face planes (18,19), dans une zone annulaire respective (34,39) située entre ladite zone de solidarisation (27) et ledit chant périphérique intérieur (21) et localisée à proximité de la face plane (18,19) respective.

## Patentansprüche

1. Verfahren zur Herstellung eines Achsschenkels mit Scheibe (1), der zur Anbringung eines Rades (Nabe 2) zur Drehung um eine bestimmte Längsachse (3) bezüglich eines Trägers (4) bestimmt ist und zu diesem Zweck folgendes aufweist:
- ein Teil (8), das zur Anbringung an den Träger (4) eine querverlaufende Scheibe bildet, die eine äußere, längsverlaufende Umfangskante (10) aufweist, die die genannte Längsachse (3) umgibt, und
- ein Teil (9), das einen längsverlaufenden Achsschenkel zur drehbaren Anbringung des Rades (Nabe 2) bildet, einen längsverlaufenden Außenumfang (11) aufweist, der eine Rotationsfigur um die genannte Längsachse (3) bildet, und auf der einen Seite des Teils (8), das die Scheibe bildet, einen längsverlaufenden Vorsprung bildet,
wobei dieses Verfahren die Folge von Schritten umfaßt, die bestehen aus:
a) dem gesonderten Herstellen von
- einerseits einem ersten Bestandteil (15), das dazu bestimmt ist, das Teil (8) auszumachen, das die Scheibe bildet, und zwar in einer Form, die durch zwei ebene Flächen (18, 19) definiert ist, die zueinander parallel sind und miteinander durch eine äußere Umfangskante (10), die dazu bestimmt ist, die genannte, äußere Umfangskante (10) zu bilden, und durch eine innere Umfangskante (21) verbunden sind, die eine Achse (3) umfaßt, die senkrecht zu den genannten Flächen (18, 19) verläuft und dazu bestimmt ist, die genannte Längsachse (3) zu bilden, und
- andererseits einem zweiten Bestandteil (16), das dazu bestimmt ist, das Teil (9) auszumachen, das den Achsschenkel bildet, und zwar in einer Form, die um eine Achse (3) insgesamt rotationssymmetrisch ist, die dazu bestimmt ist, die Längsachse (3) zu bilden, und eine Montagezone (29) zur drehbaren Montage des Rades (Nabe 2), die einen Außenumfang (11) aufweist, der dazu bestimmt ist, den genannten Außenumfang (11) zu bilden, und eine Zone (27) der festen Verbindung mit dem ersten Bestandteil (15) umfaßt, die einen Außenumfang (30) aufweist, der zur genannten inneren Umfangskante (21) komplementär ist,
b) dem koaxialen Einsetzen des zweiten Bestandteils (16) mit seiner Zone der festen Verbindung (27) in die innere Umfangskante (21) des ersten Bestandteils (15), und zwar in einer bestimmten Relativlage, in der die Zone (29) der drehbaren Anbringung gegenüber einer ersten (19) der genannten, ebenen Flächen (18, 19) einen axialen Vorsprung bildet, und
c) dem gegenseitigen festen Verbinden des ersten und zweiten Bestandteils (15, 16), die so koaxial in der genannten, bestimmten Relativlage zusammengesetzt sind,
wobei dieses Verfahren **dadurch gekennzeichnet ist, daß** man während des Schrittes a) das erste Bestandteil (15) derart herstellt, daß die genannte, innere Umfangskante (21) eine Rotationsfigur um die entsprechende Achse (3) aufweist, wobei die genannte Form eine Kegelstumpfform ist, die von der ersten (19) der genannten ebenen Flächen (18, 19), mindestens an ihrer Einmündung in die erste (19) der genannten ebenen Flächen (18, 19) zur zweiten (18) der genannten, ebenen Flächen (18, 19) hin konvergiert, und daß man das zweite Bestandteil (16) derart herstellt, daß der Außenumfang (30) seiner Zone (17) der festen Verbindung mit dem ersten Bestandteil (15) ebenfalls eine Rotationsfigur um die eintsprechende Achse (3) mit einer Konizität bildet, die identisch zu jener der inneren Kante (21) des ersten Bestandteils (15) ist.

2. Verfahren nach Anspruch 1, **dadurch gekennzeichnet**, däß man das erste Bestandteil (15) durch Abschneiden einer Scheibe während des Schrittes a) herstellt.

3. Verfahren nach einem der Ansprüche 1 und 2, **dadurch gekennzeichnet, daß** man das zweite Bestandteil (16) durch ein Verfahren herstellt, das in einer Gruppe ausgewählt wird, die das Abstechen oder Schmieden, gefolgt von spannender Bearbeitung während des Schrittes a) umfaßt.

4. Verfahren nach einem der Ansprüche 1 bis 3, **dadurch gekennzeichnet, daß** man das zweite Bestandteil (16) derart herstellt, daß es einen koaxialen Bereich (28) zur nachherigen Anbringung eines Flansches (7) zur Montage eines Gehäuses für Scheibenbremszylinder zwischen den genannten Zonen der drehbaren Anbringung und der festen Verbindung (27, 29) aufweist, wobei der genannte Bereich (28) mindestens bezüglich der Zone der drehbaren Anbringung (29) einen radialen Vorsprung bildet.

5. Verfahren nach einem der Ansprüche 1 bis 4, **dadurch gekennzeichnet, daß** man das zweite Bestandteil (16) während des Schrittes a) derart herstellt, daß es eine ebene Endfläche (33) bildet, die axial die Zone der festen Verbindung (27), der Zone der drehbaren Anbringung (29) entgegengesetzt, begrenzt, und daß man die genannte Endfläche (33) während des Schrittes b) koplanar mit der zweiten (18) der genannten ebenen Flächen (18, 19) in der genannten, bestimmten Relativlage zusammenfallen läßt.

6. Verfahren nach einem der Ansprüche 1 bis 5, **dadurch gekennzeichnet, daß** man das erste Bestandteil (16) derart herstellt, daß die genannte, innere Kante (21) mindestens an ihrer Einmündung in die zweite (18) der genannten, ebenen Flächen (18, 19) während des Schrittes a) eine zylindrische Form aufweist.

7. Verfahren nach einem der Ansprüche 1 bis 6, **dadurch gekennzeichnet, daß** man den Schritt c) durch gegenseitige Verschweißung des ersten und zweiten Bestandteils (15, 16) rund um die genannte Zone fester Verbindung (27) und der genannten, inneren Umfangskante (21) ausführt.

8. Verfahren nach Anspruch 7, **dadurch gekennzeichnet, daß** man die genannte, gegenseitige Verschweißung durch jede der ersten (19) und zweiten der genannten, ebenen Flächen (18, 19) in einer jeweiligen Ringzone (34, 35) durchführt, die zwischen der genannten Zone fester Verbindung (27) und der genannten, inneren Umfangskante (21) gelegen ist und in der Nähe der jeweiligen, ebenen Fläche (18, 19) liegt.

9. Achsschenkel mit Scheibe, der zur Anbringung eines Rades (Nabe 2) zur Drehung um eine bestimmte Längsachse (3) bezüglich eines Trägers (4) bestimmt ist und zu diesem Zweck folgendes aufweist:
- ein Teil (8), das zur Anbringung an den Träger (4) eine querverlaufende Scheibe bildet, die eine äußere, längsverlaufende Umfangskante (10) aufweist, die die genannte Längsachse (3) umgibt, und
- ein Teil (9), das einen längsverlaufenden Achsschenkel zur drehbaren Anbringung des Rades (Nabe 2) bildet, einen längsverlaufenden Außenumfang (11) aufweist, der eine Rotationsfigur um die genannte Längsachse (3) bildet, und auf der einen Seite des Teils (8), das die Scheibe bildet, einen längsverlaufenden Vorsprung bildet, wobei dieser Achsschenkel folgendes umfaßt:
- ein erstes Bestandteil (15), das das Teil (8) darstellt, das die Scheibe bildet, und zwar in einer Form, die durch zwei ebene Flächen (18, 19) definiert ist, die senkrecht zur genannten Längsachse (3) verlaufen und miteinander durch die genannte äußere Umfangskante (10) sowie durch eine innere Umfangskante (21) verbunden sind, die die Längsachse (3) umgibt, und
- ein zweites Bestandteil (16), das das den Achsschenkel bildende Teil (9) in einer Form darstellt, die insgesamt eine Rotationssymmetrie um die genannte Längsachse (3) aufweist und eine Zone (29) zur drehbaren Anbringung des Rades (Nabe 2), die den genannten Außenumfang (11) aufweist, sowie eine Zone (27) zur festen Verbindung mit dem ersten Bestandteil (15) umfaßt, die einen Außenumfang (30) aufweist, der zur genannten inneren Umfangskante (21) komplementär ist,
wobei das zweite Bestandteil (16) mit seiner Zone der festen Verbindung (27) in die innere Umfangskante (21) des ersten Bestandteils (15) koaxial eingesetzt ist, und zwar in einer bestimmten Relativlage, in der die Zone (29) der drehbaren Anbringung auf einer ersten (19) der genannten, ebenen Flächen (18, 19) den genannten, längsverlaufenden Vorsprung bildet, und das erste und zweite Bestandteil (15, 16), die so koaxial zusammengesetzt sind, in der genannten, bestimmten Relativlage fest miteinander verbunden sind,
**dadurch gekennzeichnet, daß** die genannte, innere Kante (21) des ersten Bestandteils (15) eine Rotationsfigur um die genannte Längsachse (3) aufweist, wobei die genannte Form eine Kegelstumpfform ist, die von der ersten (19) der genannten ebenen Flächen (18, 19) aus zur zweiten (18) der genannten ebenen Flächen (18, 19) mindestens an ihrer Einmündung in die erste (19) der genannten, ebenen Flächen (18, 19) konvergiert, und daß der genannte Außenumfang (30) der Zone (27) fester Verbindung des zweiten Bestandteils (16) mit dem ersten Bestandteil (15) ebenfalls eine Rotationsfigur um die genannte Längsachse (3) aufweist, und zwar mit einer Konizität, die identisch zu der der inneren Kante (21) des ersten Bestandteils (15) ist.

10. Achsschenkel mit Scheibe nach Anspruch 9, **dadurch gekennzeichnet, daß** das zweite Bestandteil (16) einen koaxialen Bereich (28) zur Anbringung eines Flansches (7) zur Anbringung eines Gehäuses für Scheibenbremszylinder zwischen den genannten Zonen zur drehbaren Anbringung und zur festen Verbindung (27, 29) aufweist, wobei der genannte Bereich (28) mindestens bezüglich der Zone zur drehbaren Anbringung (29) einen radialen Vorsprung bildet.

11. Achsschenkel mit Scheibe nach einem der Ansprüche 9 und 10, **dadurch gekennzeichnet, daß** das zweite Bestandteil (16) eine Endfläche (33) aufweist, die axial die Zone fester Verbindung (27), der Zone zur drehbaren Anbringung (29) entgegengesetzt, begrenzt und koplanar mit der zweiten (18) der genannten, ebenen Flächen (18, 19) in der genannten, bestimmten Relativlage zusammenfällt.

12. Achsschenkel mit Scheibe nach einem der Ansprüche 9 bis 11, **dadurch gekennzeichnet, daß** die genannte, innere Kante (21) des ersten Bestandteils (15) mindestens bei ihrer Einmündung in die zweite (18) der genannten, ebenen Flächen (18, 19) eine zylindrische Form aufweist.

13. Achsschenkel mit Scheibe nach einem der Ansprüche 9 bis 12, **dadurch gekennzeichnet, daß** das erste und zweite Bestandteil (15, 16) miteinander durch Verschweißung rund um die genannte Zone fester Verbindung (27) und die genannte, inneren Umfangskante (21) fest verbunden sind.

14. Achsschenkel mit Scheibe nach Anspruch 13, **dadurch gekennzeichnet, daß** die genannte Verschweißung in der Nähe einer jeden der ersten (19) und zweiten (18) der genannten, ebenen Flächen (18, 19) in einer jeweiligen Ringzone (34, 39) vorliegt, die zwischen der genannten Zone fester Verbindung (27) und der genannten, inneren Umfangskante (21) liegt und in der Nähe der jeweiligen ebenen Fläche (18, 19) angeordnet ist.

## Claims

1. Method for fabricating a spindle and plate assembly (1), for mounting a wheel (hub 2) for rotation about a specified longitudinal axis (3) with respect to a support (4), and having for this purpose:
- a part (8) forming a transverse plate for mounting on the support (4), having a longitudinal external peripheral edge (10) surrounding the said longitudinal axis (3),
- a part (9) forming a longitudinal spindle providing a journal mounting for the wheel (hub 2), having a longitudinal external periphery (11) of revolution about the said longitudinal axis (3), and forming a longitudinal projection from one side of the part (8) forming the plate,
this method comprising the following sequence of steps:
a) separately fabricating:
- on the one hand, a first component (15) to constitute the part (8) forming the plate, in a shape defined by two flat faces (18, 19), parallel to each other and interconnected by an external peripheral edge (10) designed to form the said external peripheral edge (10) and by an internal peripheral edge (21) surrounding an axis (3) perpendicular to the said faces (18, 19) and designed to form the said longitudinal axis (3),
- on the other hand, a second component (16) to constitute the part (9) forming the spindle, in a shape having a general symmetry of revolution about an axis (3) designed to form the said longitudinal axis (3) and comprising an area (29) for the journal mounting of the wheel (hub 2), having an external periphery (11) designed to form the said external periphery (11), and an area (27) for joining to the first component (15), having an external periphery (30) complementary to the said internal peripheral edge (21),
b) coaxially fitting the joining area (27) of the second component (16) into the internal peripheral edge (21) of the first component (15), in a specified relative position in which the journal mounting area (29) forms an axial projection on a first (19) of the said flat faces (18, 19),
c) joining together the first and second components (15, 16) fitted together coaxially in this way in the said specified relative position,
this method being **characterized in that**, in step a, the first component (15) is fabricated in such a way that the said internal edge (21) forms a shape of revolution about the corresponding axis (3), the said shape being a truncated conical shape converging from the first (19) of the said flat faces (18, 19) towards the second (18) of the said flat faces (18, 19), at least at its opening in the first (19) of the said flat faces (18, 19), and the second component (16) is fabricated in such a way that the external periphery (30) of its area (17) for joining to the first component (15) also forms a shape of revolution about the corresponding axis (3), with a cone angle identical to that of the internal edge (21) of the first component (15).

2. Method according to Claim 1, **characterized in that** the first component (15) is fabricated by cutting from a plate in step a.

3. Method according to either of Claims 1 and 2, **characterized in that** the second component (16) is fabricated by a method chosen from a set of methods comprising cutting off and forging followed by machining in step a.

4. Method according to any one of Claims 1 to 3, **characterized in that** the second component (16) is fabricated in such a way that it has a coaxial bearing surface (28) for the additional mounting of a mounting flange (7) of a disc brake cylinder housing, between the said journal mounting area (29) and the said joining area (27), the said bearing surface (28) forming a radial projection at least with respect to the journal mounting area (29).

5. Method according to any one of Claims 1 to 4, **characterized in that** the second component (16) is fabricated in such a way that it has a flat end face (33), axially delimiting the joining area (27) at the opposite end from the journal mounting area (29), in step a, and **in that** the said end face (33) is made to coincide in a coplanar way with the second (18) of the said flat faces (18, 19) in step b, in the said specified relative position.

6. Method according to any one of Claims 1 to 5, **characterized in that** the first component (16) is fabricated in such a way that the said internal edge (21) is cylindrical at least at its opening in the second (18) of the said flat faces (18, 19) in step a.

7. Method according to any one of Claims 1 to 6, **characterized in that** step c is implemented by welding together the first and second components (15, 16), around the said joining area (27) and the said internal peripheral edge (21).

8. Method according to Claim 7, **characterized in that** the said welding together is carried out from each of the first (19) and second of the said flat faces (18, 19), in a respective annular area (34, 35) situated between the said joining area (27) and the said internal peripheral edge (21) and located in the proximity of the respective flat face (18, 19).

9. Spindle and plate assembly, for mounting a wheel (hub 2) for rotation about a specified longitudinal axis (3) with respect to a support (4) and having for this purpose:
- a part (8) forming a transverse plate for mounting on the support (4), having a longitudinal external peripheral edge (10) surrounding the said longitudinal axis (3),
a part (9) forming a longitudinal spindle providing a journal mounting for the wheel (hub 2), having a longitudinal external periphery (11) of revolution about the said longitudinal axis (3), and forming a longitudinal projection from one side of the part (8) forming the plate,
this spindle comprising:
- a first component (15) constituting the part (8) forming the plate, in a shape defined by two flat faces (18, 19) which are perpendicular to the said longitudinal axis (3) and are joined together by the said external peripheral edge (10) and by an internal peripheral edge (21) surrounding the said longitudinal axis (3);
- a second component (16) constituting the part (9) forming the spindle, in a shape having a general symmetry of revolution about the said longitudinal axis (3) and comprising an area (29) for the journal mounting of the wheel (hub 2), having the said external periphery (11), and an area (27) for joining to the first component (15), having an external periphery (30) complementary to the said internal peripheral edge (21),
the joining area (27) of the second component (16) being fitted coaxially into the internal peripheral edge (21) of the first component (15), in a specified relative position in which the journal mounting area (29) forms the said longitudinal projection on a first (19) of the said flat faces (18, 19),
the first and second components (15, 16) fitted together coaxially in this way being joined together in the said specified relative position,
**characterized in that** the said internal edge (21) of the first component (15) forms a shape of revolution about the said longitudinal axis (3), the said shape being a truncated conical shape converging from the first (19) of the said flat faces (18, 19) towards the second (18) of the said flat faces (18, 19), at least at its opening in the first (19) of the said flat faces (18, 19), and **in that** the said external periphery (30) of the area (27) for joining the second component (16) to the first component (15) also forms a shape of revolution about the said longitudinal axis (3), with a cone angle identical to that of the internal edge (21) of the first component (15).

10. Spindle and plate assembly according Claim 9, **characterized in that** the second component (16) has a coaxial bearing surface (28) for the mounting of a mounting flange (7) of a disc brake cylinder housing, between the said journal mounting area (29) and the said joining area (27), the said bearing surface (28) forming a radial projection at least with respect to the journal mounting area (29).

11. Spindle and plate assembly according to either of Claims 9 and 10, **characterized in that** the second component (16) has a flat end face (33), axially delimiting the joining area (27) at the opposite end from the journal mounting area (29) and coinciding in a coplanar way with the second (18) of the said flat faces (18, 19) in the said specified relative position.

12. Spindle and plate assembly according to any one of Claims 9 to 11, **characterized in that** the said internal edge (21) of the first component (15) has a cylindrical shape at least at its opening in the second (18) of the said flat faces (18, 19).

13. Spindle and plate assembly according to any one of Claims 9 to 12, **characterized in that** the first and second components (15, 16) are joined together by welding around the said joining area (27) and the said internal peripheral edge (21).

14. Spindle and plate assembly according to Claim 13, **characterized in that** the said welding is located in the proximity of each of the first (19) and second (18) of the said flat faces (18, 19), in a respective annular area (34, 39) situated between the said joining area (27) and the said internal peripheral edge (21) and located in the proximity of the respective flat face (18, 19).
